# FASCICULE DE BREVET EUROPEEN

(11) **EP 1 235 129 B1**
(45) Date de publication et mention de la délivrance du brevet: **27.04.2005**
(21) Numéro de dépôt: 02290429.6
(22) Date de dépôt: 21.02.2002
(51) Int. Cl.: G05D 23/13

(54) **Cartouche thermostatique à disques en céramique, du type quart de tour à commandes concentriques, et robinet mélangeur muni d'une telle cartouche**
Thermostatische Kartusche mit Keramikscheiben welche konzentrisch angeordnete Steuervorrichtungen zur 90 Drehung aufweist und Mischarmatur mit einer solchen Kartusche
Quarter turn thermostatic cartridge with ceramic discs having concentric control means and mixing tap provided with such a cartridge

(30) Priorité: 23.02.2001 FR 0102517
(43) Date de publication de la demande: 28.08.2002
(73) Titulaire: VERNET S.A., 91291 Arpajon Cédex (FR)
(72) Inventeur: Mace, Christian, 91810 Vert Le Grand (FR); Chamot, Jean, 91290 Arpajon (FR)
(74) Mandataire: Jacobson, Claude

(56) Documents cités:
- DE-A- 2 804 755
- US-A- 5 931 374
- US-A- 6 085 984

## Description

L'invention concerne une cartouche thermostatique à disques en céramique, du type quart de tour à commandes concentriques, ainsi qu'un robinet mélangeur comportant une telle cartouche.

La plupart des robinets à cartouche à disques céramiques équipant actuellement les éviers ou les lavabos, du type quart de tour, ne permettent pas de stabiliser efficacement la température du fluide de sortie, dit fluide « mélangé » ou « mitigé », quand la pression ou/et la température de l'un au moins des fluides d'entrée (dits « fluide froid » et « fluide chaud » ) varie.

On a donc créé des cartouches de ce type équipées d'un élément thermostatique pour réguler la température du fluide de sortie.

On connaît en particulier des cartouches thermostatiques de ce type à monocommande, permettant de constituer des robinets « mitigeurs », c'est à dire au moyen desquels les réglages du débit et de la température sont effectués en actionnant un levier unique. Ces cartouches assurent le réglage du débit au moyen de deux disques en céramique superposés, le disque inférieur comportant des canaux de montée et de descente du fluide froid et du fluide chaud d'entrée, et la régulation de la température du fluide mitigé de sortie au moyen d'un tiroir de régulation de température situé en aval, au-dessous du disque inférieur, solidarisé à un élément thermostatique de commande.

On connaît également des cartouches thermostatiques de ce type à commandes concentriques, nécessitant un robinet comportant deux manettes concentriques pour les commandes du débit et de la température. Le réglage du débit est également assuré par deux disques en céramique, et le réglage de la température par un tiroir de régulation de température solidarisé à un élément thermostatique, mais les deux disques comportent des canaux de montée de fluide froid et de fluide chaud, et le tiroir, situé en aval de ces canaux, est cette fois disposé au-dessus du disque supérieur.

Dans les deux cas, l'agencement de la cartouche limite le diamètre disponible pour le tiroir de régulation de température et la section de passage du fluide, et il en résulte une mauvaise régulation en température, incompatible avec les normes en vigueur pour les robinets thermostatiques, et un faible débit, ce qui limite la gamme des applications possibles.

L'invention a pour but de remédier à ces inconvénients et concerne à cette fin une cartouche thermostatique à disques en céramique pour robinet de fluide, du type quart de tour à commandes concentriques, comportant un disque inférieur et un disque supérieur de réglage de débit comportant chacun un passage de fluide chaud, un passage de fluide froid, et un passage de fluide mélangé, caractérisé en ce que le passage de fluide froid du disque supérieur débouche à la périphérie de ce disque pour constituer un passage latéral de fluide froid adapté pour faire s'écouler le fluide froid radialement vers l'extérieur du disque supérieur.

Grâce à cet agencement, on obtient une régulation de température efficace dans une large plage de débits, et notamment pour des débits très intenses.

La cartouche peut en outre présenter une ou plusieurs des caractéristiques additionnelles suivantes :
- elle comporte une manette de commande de débit, un tiroir de régulation solidarisé à une partie mobile d'un élément thermostatique, et un canal annulaire pour le fluide froid s'étendant sur toute la périphérie d'une partie inférieure de la manette de commande de débit adapté pour recevoir un écoulement de fluide froid se dirigeant du disque supérieur au tiroir de régulation ;
- elle comporte une gorge pour le fluide chaud, s'étendant circonférentiellement dans au moins l'une des pièces que sont le tiroir de régulation et son siège ;
- elle comporte une manette de commande de débit liée en rotation au disque supérieur, comportant une partie supérieure de manoeuvre, une surface d'appui pour le tiroir de régulation adaptée pour délimiter un passage pour l'écoulement du fluide froid, et une surface interne latérale de guidage pour le tiroir ;
- elle comporte un organe de création de turbulences présentant une surface intérieure de forme irrégulière en vis à vis d'une région thermosensible d'un élément thermostatique.

Ces caractéristiques additionnelles permettent respectivement :
- de créer un tiroir de régulation de grand diamètre, une seule paroi étant nécessaire entre ce tiroir et le boîtier de la cartouche, ce qui permet d'obtenir une régulation précise de la température et un débit élevé,
- d'obtenir une bonne répartition du fluide chaud autour du tiroir de régulation, donc une régulation stable,
- d'optimiser les coûts de fabrication de la cartouche,
- d'homogénéiser le mélange du fluide et favoriser les échanges thermiques entre le fluide mélangé et la région thermosensible de l'élément thermostatique.

L'invention concerne également un robinet mélangeur muni d'une cartouche telle que définie ci-dessus, caractérisé en ce qu'il comporte un organe de commande de débit solidarisé à une manette de commande de débit de la cartouche, et un organe de commande de température solidarisé à une manette de commande de température de la cartouche.

D'autres caractéristiques et avantages de l'invention ressortiront de la description qui va suivre, d'une forme de réalisation de l'invention donnée à titre d'exemple non limitatif, illustrée par les dessins joints dans les lesquels :

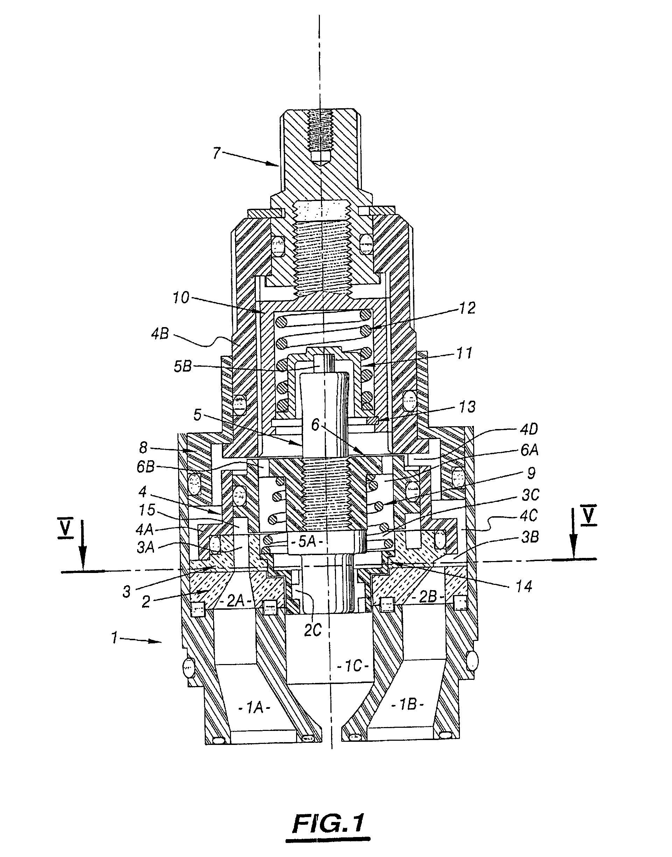

- la figure 1 est une coupe longitudinale schématique d'une cartouche thermostatique selon l'invention,

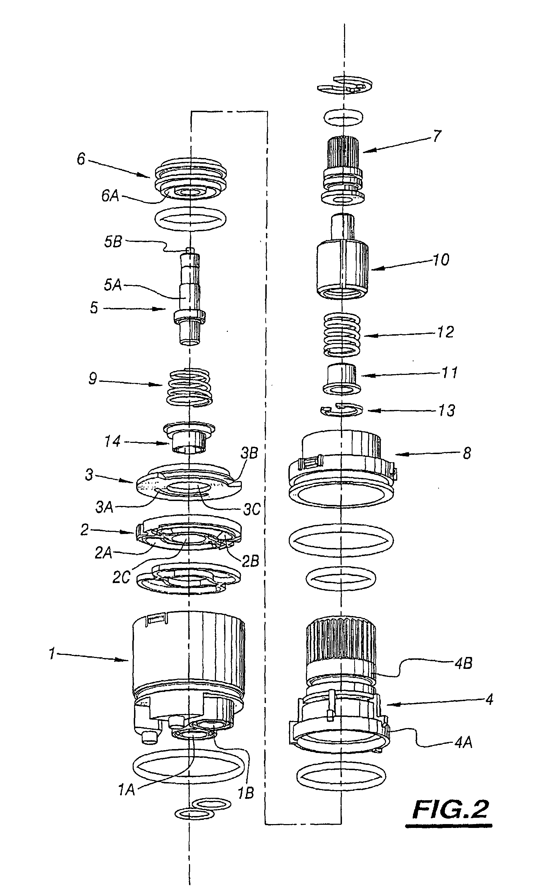

- la figure 2 est une vue éclatée en perspective montrant les principaux composants de la cartouche de la figure 1,

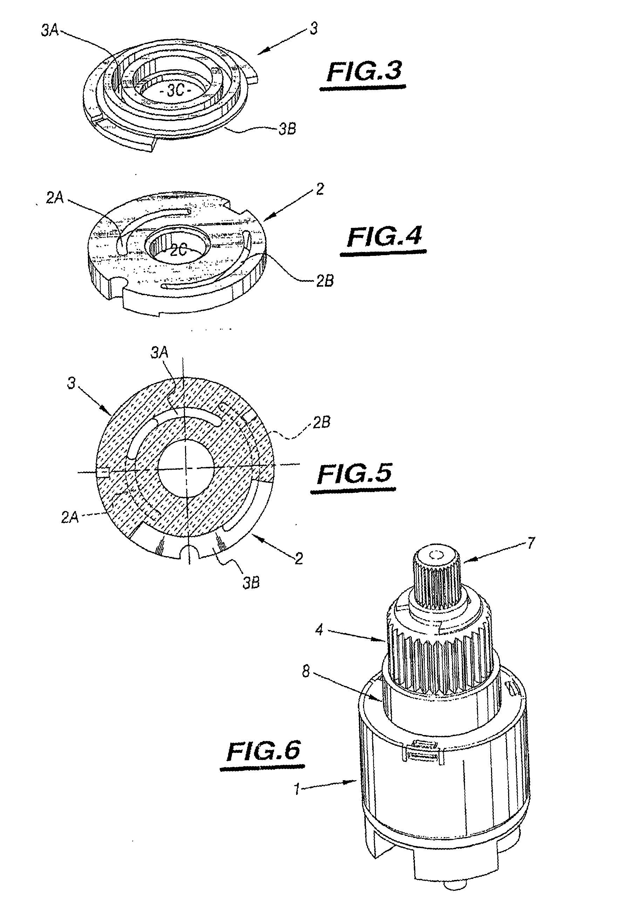

- la figure 3 est une vue en perspective d'un disque supérieur équipant la cartouche de la figure 1,
- la figure 4 est une vue en perspective d'un disque inférieur équipant la cartouche de la figure 1,
- la figure 5 est une vue en coupe par un plan transversal à la cartouche passant par la ligne V-V de la figure 1, du montage du disque supérieur de la figure 3 sur le disque inférieur de la figure 4, et
- la figure 6 est une vue extérieure en perspective de la cartouche de la figure 1.

La cartouche représentée sur les dessins, agencée autour et le long d'un axe central, est destinée à équiper un robinet mélangeur d'eau.

Elle comporte un boîtier 1 présentant dans sa base, s'étendant longitudinalement, un conduit excentré 1A d'entrée d'eau chaude, un conduit excentré 1B d'entrée d'eau froide, et un conduit central 1C de sortie d'eau mélangée, et dans sa partie supérieure extérieurement de forme générale cylindrique, un logement également de forme générale cylindrique dans lequel sont logés notamment un disque inférieur 2, un disque supérieur 3 dont la face inférieure est accolée à la face supérieure du disque inférieur 2, et la partie inférieure 4A d'une manette de commande de débit 4 adaptée pour être solidarisée à un organe de commande de débit d'un robinet mélangeur. La base de la partie inférieure 4A de la manette est enfilée autour de la partie supérieure du disque supérieur 3 lequel est lié en rotation à cette manette ; la partie inférieure 4A renferme par ailleurs un équipage mobile comprenant un élément thermostatique 5 à cire dilatable comportant une partie mobile 5A dont une région est thermosensible, à laquelle est solidarisée, par exemple vissé, un tiroir de régulation 6 ; dans la partie supérieure 4B de la manette 4, est logée la base d'une manette de commande de température 7 à laquelle l'équipage mobile est lié par un système vis-écrou et qui est adaptée pour être solidarisée à un organe de commande de température du robinet.

Plus précisément, le disque inférieur 2, lié en rotation au boîtier 1, comporte, en regard des conduits d'entrée d'eau chaude 1A, d'entrée d'eau froide 1B, et de sortie d'eau mélangée 1C, respectivement des passages d'entrée d'eau chaude 2A, d'entrée d'eau froide 2B, et de sortie d'eau mélangée 2C ; le passage de sortie 2C traverse le disque axialement ; les passages d'entrée 2A 2B s'étendent en arcs de circonférences respectivement de part et d'autre du passage de sortie, le passage d'eau chaude 2A débouchant à la face supérieure du disque par un orifice en arc de circonférence de plus petit rayon que le passage d'eau froide 2B ; un joint d'étanchéité est inséré dans des gorges creusées en vis à vis dans le boîtier 1 et le disque 2.

Le disque supérieur 3 comporte un passage d'eau chaude 3A, un passage d'eau froide 3B, et un passage d'eau mélangée 3C ; le passage d'eau mélangée 3C traverse le disque axialement ; le passage d'eau chaude et le passage d'eau froide s'étendent en arcs de circonférences respectivement de part et d'autre du passage d'eau mélangée ; le passage d'eau chaude 3A et le passage d'eau froide 3B s'étendent selon des arcs de circonférences respectivement de mêmes rayons que les passages d'entrée 2A, 2B, mais le passage d'eau froide 3B débouche, sur toute la longueur de son arc de circonférence, à la périphérie du disque 3 pour constituer un passage latéral d'eau froide adapté pour amener celle-ci à s'écouler radialement vers l'extérieur du disque ; le passage d'eau chaude 3A s'étend de préférence tout autour du passage d'eau mélangée 3C mais ne traverse le disque de part en part que sur une partie de son étendue.

La manette de commande de débit 4 liée en rotation au disque supérieur 3 est en appui, par la base de sa partie inférieure 4A, sur une colerette de celui-ci ; un joint torique est interposé entre la surface latérale intérieure de la manette et la surface latérale extérieure du disque ; la manette 4 comporte un épaulement reliant sa partie inférieure 4A et sa partie supérieure de manoeuvre 4B cannelée ou rainurée longitudinalement, par lequel elle est liée axialement au boîtier 1 en étant en appui contre un bouchon 8 de celui-ci inséré dans le boîtier avec interposition d'un joint torique. Les dimensions extérieures de la partie inférieure 4A sont inférieures au diamètre intérieur du boîtier 1 de manière à réserver un canal annulaire 4C pour l'eau froide à l'intérieur du boîtier et du bouchon 8 sur toute la périphérie de la manette. La paroi de la région de la partie inférieure 4A qui est proche de l'épaulement n'est pas continue sur la périphérie de la manette, mais la liaison entre cette région et l'épaulement est assurée par des ponts de matière constituant des bras délimitant entre eux des passages latéraux 4D pour l'eau froide.

Le tiroir de régulation 6 est monté coulissant à l'intérieur de la partie inférieure 4A de la manette de commande de débit 4 dans laquelle il est guidé par la surface intérieure latérale de celle-ci avec interposition d'un joint d'étanchéité torique ; il est adapté pour pouvoir venir en appui sélectivement par l'une de ses faces contre la face supérieure du disque supérieur 3 ou par sa face opposée contre la surface du fond de la partie inférieure 4A de la manette de commande de débit ; il comporte intérieurement une chambre annulaire 6A, débouchant dans sa face qui est en vis à vis du disque supérieur, dans laquelle est logé un ressort de rappel 9 ; il comporte également des trous de passage d'eau froide 6B pour permettre l'écoulement de l'eau froide longitudinalement à travers le tiroir, débouchant d'un côté dans la face du tiroir tournée vers le fond de la partie inférieure 4A de la manette et du côté opposé dans la chambre 6A.

Une vis de réglage de température 10 est logée à l'intérieur de la partie supérieure 4B de la manette de commande de débit, à laquelle elle est liée en rotation ; cette vis de réglage 10 est liée par un filetage à la manette de commande de température 7 ; elle comporte une chambre intérieure ou sont logés un appui de surcourse 11 en forme de cloche pour une partie normalement fixe 5B de l'élément thermostatique 5 (c'est à dire fixe en l'absence de surcourse de l'élément 5 due à une température très élevée), un ressort de surcourse 12, et une rondelle d'arrêt 13 fendue élastique dont une partie de pourtour est logée dans une gorge annulaire de la surface intérieure de la chambre, à proximité de l'extrémité de celle-ci qui est ouverte vers le tiroir 6 ; la partie normalement fixe 5B le l'élément thermostatique (ici le piston intérieur de l'élément 5) est appliquée contre le fond de l'appui de surcourse 11, et, en l'absence de surcourse, le ressort de surcourse 12 applique l'appui de surcourse 11 contre la rondelle d'arrêt 13.

Un organe annulaire de création de turbulences 14, dit « turbulateur », fixé dans la sortie 2C et le passage 3C d'eau mélangée autour de la région thermosensible de la partie mobile 5A de l'élément thermostatique 5, a une surface intérieure de forme irrégulière en vis à vis et à distance de cette région pour assurer l'homogénéité en température de l'écoulement de sortie de la cartouche entre le turbulateur 14 et l'élément 5, et favoriser l'échange thermique entre l'eau mélangée et la région thermosensible de l'élément thermostatique.

Le bouchon 8 assurant la cohésion des pièces de la cartouche permet notamment de plaquer les disques 2,3 l'un contre l'autre au moyen de la manette 4 de commande de débit.

Le fonctionnement de la cartouche est le suivant :

L'eau chaude entre dans la cartouche par le conduit 1A du boîtier 1, parcourt les passages 2A, 3A des disques 2, 3, se répand dans un canal annulaire 15 défini entre le disque supérieur 3, la manette 4 et le tiroir 6, passe par l'espace entre le disque supérieur 3 et le tiroir 6, et parvient à la base de la chambre 6A du tiroir 6. Simultanément, l'eau froide entre dans la cartouche par le conduit 1B du boîtier 1, parcourt les passages 2B, 3B des disques 2, 3, et après être sortie radialement du passage latéral 3B du disque supérieur 3, se répand dans le canal annulaire 4C, traverse les passages 4D de la manette 4 pour atteindre le tiroir 6, passe par l'espace entre le tiroir 6 et le fond de la partie inférieure 4A de la manette 4, puis par les trous de passage 6B et parvient dans le fond de la chambre 6A.

A la base du tiroir 6, l'eau chaude et l'eau froide commencent à se mélanger, et le mélange se poursuit autour de l'élément thermostatique 5, à l'intérieur du turbulateur 14, et à l'intérieur du conduit 1C de sortie.

Le réglage du débit est obtenu par une rotation de la manette de commande de débit 4, provoquant une rotation du disque supérieur 3 définissant la position angulaire de ce disque par rapport au disque inférieur 2, et ainsi la section d'écoulement pour l'eau chaude résultant de la superposition plus au moins étendue des passages 2A, 3A, et la section d'écoulement pour l'eau froide résultant de la superposition plus au moins étendue des passages 2B, 3B. Les formes des passages sont adaptées pour que les sections d'écoulement d'eau chaude et d'eau froide soient égales quelle que soit la position angulaire relative entre les deux disques. Les sections d'écoulement varient de la fermeture totale à une ouverture maximale.

Quand la température de l'eau mélangée augmente, l'élément thermostatique 5 s'allonge, le tiroir de régulation 6 qui est lié à lui réduit l'espace qui le sépare du disque supérieur 3 et augmente celui qui le sépare du fond de la partie inférieure 4A de la manette de commande de débit 4, ce qui diminue la section d'écoulement de l'eau chaude et augmente la section d'écoulement de l'eau froide ; il en résulte une diminution de la température de l'eau mélangée ; le fonctionnement est inverse quand la température de l'eau mélangée diminue. Les corrections de la température de l'eau mélangée par l'élément thermostatiques s'équilibrent jusqu'à la stabilisation de cette température à une valeur qui dépend de l'altitude à laquelle culmine le piston de l'élément thermostatique 5.

Le réglage de la température est obtenu par la rotation de la manette de commande de température 7 qui, par un système vis-écrou, imprime un mouvement de translation à la vis de réglage de température 10, qui entraîne l'appui de surcourse 11 (tant que le tiroir de régulation 6 n'est pas en appui contre le disque supérieur 3) contre lequel le piston de l'élément thermostatique 5 est en appui. Un dispositif de butée interne à la cartouche (butée de la vis de réglage de température 10 sur la manette de commande de température 7) ou externe (volant adapté sur la manette 7) limite la température de réglage à une valeur appropriée (par exemple 50°C ou 55°C maximum au point de « puisage »). En outre, s'il survient une coupure d'eau froide, l'élément thermostatique 5 est sensibilisé uniquement par l'eau chaude, le piston s'étend de manière importante, le tiroir de régulation 6 à qui il est lié se déplace jusqu'à arriver en contact contre son siège constitué par le disque supérieur 3, et l'appui de surcourse 11 s'éloigne de la rondelle d'arrêt 13 en comprimant le ressort de surcourse 12 ; il en résulte une fermeture automatique de l'eau chaude, évitant ainsi tout risque de brûlure, ce qui confère à la cartouche une fonction de sécurité anti-brûlure.

Bien entendu, l'invention n'est pas limitée à la forme de réalisation ci-dessus décrite et représentée, et on pourra en prévoir d'autres sans sortir de son cadre.

Par exemple, il est possible de prévoir diverses variantes pour le trajet de l'eau chaude avant qu'elle pénètre dans le tiroir de régulation 6, entre celui-ci et son siège tel que le disque supérieur 3, ce trajet comprenant de préférence une gorge aménagée circonférentiellement soit dans le tiroir de régulation 6, soit dans son siège tel que le disque supérieur 3 (passage 3A), soit dans les deux.

## Revendications

1. Cartouche thermostatique à disques en céramique pour robinet de fluide, du type quart de tour à commandes concentriques, comprenant d'une part un tiroir de régulation (6) solidarisé à une partie mobile (5A) d'un élément thermostatique (5), et d'autre part un disque inférieur (2) et un disque supérieur (3) de réglage de débit comportant chacun un passage de fluide chaud (2A, 3A), un passage de fluide froid (2B, 3B), et un passage de fluide mélangé (2C, 3C), **caractérisé en ce que** le passage de fluide froid (3B) du disque supérieur (3) débouche à la périphérie de ce disque (3) pour constituer un passage latéral de fluide froid adapté pour faire s'écouler le fluide froid radialement vers l'extérieur du disque supérieur (3), et **en ce que** la face supérieure du disque supérieur (3) forme un siège pour le tiroir (6) pour la régulation du fluide chaud.

2. Cartouche thermostatique selon la revendication 1, **caractérisée en ce qu'**elle comporte une manette de commande de débit (4) et un canal annulaire (4C) pour le fluide froid s'étendant sur toute la périphérie d'une partie inférieure (4A) de la manette de commande de débit (4) adapté pour recevoir un écoulement de fluide froid se dirigeant du disque supérieur (3) au tiroir de régulation (6).

3. Cartouche thermostatique selon l'une quelconque des revendications 1 et 2, **caractérisée en ce qu'**elle comporte une gorge (15, 3A) pour le fluide chaud, s'étendant circonférentiellement dans au moins l'une des pièces que sont le tiroir de régulation (6) et son siège.

4. Cartouche thermostatique selon l'une quelconque des revendications 1 à 3, **caractérisée en ce qu'**elle comporte une manette de commande de débit (4) liée en rotation au disque supérieur (3), comportant une partie supérieure de manoeuvre (4B), une surface d'appui pour le tiroir de régulation (6) adaptée pour délimiter un passage pour l'écoulement du fluide froid, et une surface interne latérale de guidage pour le tiroir (3).

5. Cartouche thermostatique selon l'une quelconque des revendications 1 à 4, **caractérisée en ce qu'**elle comporte un organe de création de turbulences (14) présentant une surface intérieure de forme irrégulière en vis à vis d'une région thermosensible d'un élément thermostatique (5).

6. Robinet mélangeur muni d'une cartouche selon l'une quelconque des revendications 1 à 5, **caractérisé en ce qu'**il comporte un organe de commande de débit solidarisé à une manette de commande de débit (4) de la cartouche, et un organe de commande de température solidarisé à une manette de commande de température (7) de la cartouche.

## Patentansprüche

1. Thermostatische Kartusche mit Keramikscheiben für eine Flüssigkeitsarmatur mit Vierteldrehung mit konzentrischen Bedienelementen, welche einerseits einen Regulierungsschieber (6) aufweist, der an einem beweglichen Teil (5A) eines thermostatischen Elements (5) befestigt ist, und andererseits eine untere Durchflussregelungsscheibe (2) und eine obere Durchflussregelungsscheibe (3) aufweist, welche jeweils einen Durchlass für warme Flüssigkeit (2A, 3A), einen Durchlass für kalte Flüssigkeit (2B, 3B) und einen Durchlass für gemischte Flüssigkeit (2C, 3C) besitzen,
**dadurch gekennzeichnet,**
**dass** der Durchlass für kalte Flüssigkeit (3B) der oberen Scheibe (3) am Rand dieser Scheibe (3) herauskommt, um einen seitlichen Durchlass für kalte Flüssigkeit zu bilden, der geeignet ist, die kalte Flüssigkeit radial in Richtung der Außenseite der oberen Scheibe (3) fließen zu lassen, und dass die Oberseite der oberen Scheibe (3) einen Sitz für den Schieber (6) zur Regulierung der warmen Flüssigkeit bildet.

2. Thermostatische Kartusche nach Anspruch 1,
**dadurch gekennzeichnet,**
**dass** sie ein Bedienelement (4) zur Durchflusssteuerung und einen ringförmigen Kanal (4C) für die kalte Flüssigkeit aufweist, der sich über den gesamten Umfang eines unteren Teils (4A) der Handhabe (4) der Durchflusssteuerung erstreckt und geeignet ist, eine Strömung von kalter Flüssigkeit aufzunehmen, welche von der oberen Scheibe (3) zum Regulierungsschieber (6) gerichtet ist.

3. Thermostatische Kartusche nach einem der Ansprüche 1 oder 2,
**dadurch gekennzeichnet,**
**dass** sie eine Rille (15, 3A) für die warme Flüssigkeit aufweist, welche sich in Umfangsrichtung in dem Regulationsschieber (6) und / oder seinem Sitz erstreckt.

4. Thermostatische Kartusche nach einem der Ansprüche 1 bis 3,
**dadurch gekennzeichnet,**
**dass** sie ein drehfest mit der oberen Scheibe (3) verbundenes Bedienelement (4) zur Durchflusssteuerung aufweist, das einen oberen Betätigungsteil (4B), eine Abstützfläche für den Regulierungsschieber (6), welche geeignet ist, einen Durchlass für die Strömung der kalten Flüssigkeit zu begrenzen, und eine innere seitliche Führungsfläche für den Schieber (3) umfasst.

5. Thermostatische Kartusche nach einem der Ansprüche 1 bis 4,
**dadurch gekennzeichnet,**
**dass** sie ein Organ (14) zum Erzeugen von Turbulenzen aufweist, welches gegenüber einem thermosensiblen Bereich eines thermostatischen Elements (5) eine innere Oberfläche mit unregelmäßiger Form besitzt.

6. Mischbatterie, welche mit einer Kartusche nach einem der Ansprüche 1 bis 5 ausgestattet ist,
**dadurch gekennzeichnet,**
**dass** sie ein an einem Bedienelement (4) zur Steuerung des Durchflusses durch die Kartusche befestigtes Durchflusssteuerorgan und ein an einem Bedienelement zur Steuerung der Temperatur (7) der Kartusche befestigtes Temperatursteuerorgan aufweist.

## Claims

1. Ceramic disc thermostat cartridge for a fluid tap of the quarter turn concentric control type, comprising firstly a regulator slide valve (6) constructed in one piece with a movable part (5A) of a thermostat element (5) and secondly a lower flow control disc (2) and an upper flow control disc (3), each having a passage for hot fluid (2A, 3A), a passage for cold fluid (2B, 3B) and a passage for mixed fluid (2C, 3C), **characterised in that** the passage for cold fluid (3B) of the upper disc (3) opens on the periphery of this disc (3) to form a lateral cold fluid passage arranged to allow the cold fluid to flow radially towards the outside of the upper disc (3), and that the upper face of the upper disc (3) forms a seat for the slide valve (6) for regulation of the hot fluid.

2. Thermostat cartridge according to Claim 1, **characterised in that** it has a flow control lever (4) and an annular conduit (4C) for the cold fluid, which extends over the entire periphery of a lower part (4A) of the flow control lever (4) arranged to receive a flow of cold fluid directed from the upper disc (3) to the regulator slide valve (6).

3. Thermostat cartridge according to any one of Claims 1 and 2, **characterised in that** it has a channel (15, 3A) for the hot fluid, which extends circumferentially into at least one of the parts forming? the regulator slide valve (6) and its seat.

4. Thermostat cartridge according to any one of Claims 1 to 3, **characterised in that** it has a flow control lever (4) connected in rotation to the upper disc (3), which has an upper operating section (4B), a support surface for the regulator slide valve (6) arranged to define a passage for the flow of the cold fluid, and a lateral inside surface for guidance of the slide valve (3).

5. Thermostat cartridge according to any one of Claims 1 to 4, **characterised in that** it has an element for creating turbulence (14), which has an irregularly shaped inside surface facing a heat-sensitive area of a thermostat element (5).

6. Mixer tap fitted with a cartridge according to any one of Claims 1 to 5, **characterised in that** it has a flow control element constructed in one piece with a flow control lever (4) of the cartridge, and a temperature control element constructed in one piece with a temperature control lever (7) of the cartridge.
